# EUROPÄISCHE PATENTSCHRIFT

(11) **EP 1 430 210 B1**
(45) Veröffentlichungstag und Bekanntmachung des Hinweises auf die Patenterteilung: **30.03.2005**
(21) Anmeldenummer: 02799358.3
(22) Anmeldetag: 26.07.2002
(51) Int. Cl.: F02D 41/40

(54) **VERFAHREN ZUM VERMEIDEN EINER SPRITZLOCHINNENVERKOKUNG VON SPRITZLÖCHERN EINES MEHRLOCH-EINSPRITZVENTILS**
METHOD FOR AVOIDING AN INTERNAL COKING OF AN INJECTION HOLE FOR INJECTION HOLES IN A MULTI-HOLE INJECTION VALVE
PROCEDE POUR EVITER UNE CARBONISATION INTERIEURE DE TROUS D'INJECTION D'UNE SOUPAPE D'INJECTION A TROUS MULTIPLES

(30) Priorität: 15.09.2001 DE 10145580
(43) Veröffentlichungstag der Anmeldung: 23.06.2004
(73) Patentinhaber: ROBERT BOSCH GMBH, 70442 Stuttgart (DE)
(72) Erfinder: BRITSCH, Heinz, 74321 Bietigheim-Bissingen (DE); WUERFEL, Gernot, 71665 Vaihingen/Enz (DE)
(86) Internationale Anmeldenummer: PCT/DE2002/002786
(87) Internationale Veröffentlichungsnummer: WO 2003/027473

(56) Entgegenhaltungen:
- EP-A- 0 361 480
- EP-A- 0 982 489
- EP-A- 1 028 243
- EP-A- 1 070 839
- DE-A- 3 446 439

## Beschreibung

Die vorliegende Erfindung betrifft ein Verfahren zum Betreiben einer direkteinspritzenden Brennkraftmaschine insbesondere eines Kraftfahrzeugs. Dabei wird dem über ein Einspritzventil Kraftstoff durch eine erste Haupteinspritzung und eine anschließende Nacheinspritzung in einen Brennraum der Brennkraftmaschine eingespritzt wird.

Die Erfindung betrifft außerdem ein Computerprogramm, das auf einem Rechengerät, insbesondere auf einem Mikroprozessor, ablauffähig ist.

Des Weiteren betrifft die vorliegende Erfindung ein Speicherelement für ein Steuergerät einer direkteinspritzenden Brennkraftmaschine insbesondere eines Kraftfahrzeugs. Auf dem Speicherelement ein Computerprogramm abgespeichert, das auf einem Rechengerät, insbesondere auf einem Mikroprozessor, ablauffähig ist. Das Speicherelement ist bspw. als ein Read-Only-Memory, als ein Random-Access-Memory oder als ein Flash-Memory ausgebildet.

Die Erfindung betrifft außerdem ein Steuergerät für eine direkteinspritzende Brennkraftmaschine insbesondere eines Kraftfahrzeugs. Die Brennkraftmaschine weist mindestens einen Brennraum mit einem Einspritzventil auf. Das Steuergerät steuert das Einspritzventil derart an, dass das Einspritzventil Kraftstoff durch eine erste Haupteinspritzung und eine anschließende Nacheinspritzung in den Brennraum der Brennkraftmaschine einspritzt.

### Stand der Technik

Direkteinspritzende Brennkraftmaschinen, bei denen Kraftstoff direkt in die Brennräume der Brennkraftmaschine eingespritzt wird, sind aus dem Stand der Technik bekannt. Eine direkteinspritzende Brennkraftmaschine kann in unterschiedlichen Betriebsarten, bspw. einem Schichtbetrieb oder einem Homogenbetrieb, betrieben werden. Der schichtbetrieb wird insbesondere bei kleineren Lasten verwendet, während der Homogenbetrieb bei größeren, an der Brennkraftmaschine anliegenden Lasten zur Anwendung kommt.

Im Schichtbetrieb wird der Kraftstoff während eines verdichtungstaktes der Brennkraftmaschine in den Brennraum derart eingespritzt, dass sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, dass die eingespritzte Kraftstoffwolke sich bereits während bzw. unmittelbar nach der Einspritzung bei der Zündkerze befindet und von dieser entzündet wird. Ebenfalls ist es möglich, dass die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Schichtbetriebs liegt darin, dass mit einer sehr geringen Kraftstoffmenge die anliegenden kleineren Lasten von der Brennkraftmaschine ausgeführt werden können. Größere Lasten können allerdings nicht durch den Schichtbetrieb erfüllt werden.

In dem für derartige größere Lasten vorgesehenen Homogenbetrieb wird der Kraftstoff während eines Ansaugtaktes der Brennkrafrmaschine eingespritzt, so dass eine Verwirbelung und damit eine Verteilung des Kraftstoffs in dem Brennraum noch ohne weiteres vor der Zündung des Kraftstoff-Luft-Gemisches erfolgen kann. Insoweit entspricht der Homogenbetrieb in etwa der Betriebsweise von Brennkraftmaschinen, bei denen in herkömmlicher Weise Kraftstoff in das Ansaugrohr eingespritzt wird. Bei Bedarf kann auch bei kleineren Lasten in den Homogenbetrieb umgeschaltet werden.

Im Schichtbetrieb wird die Drosselklappe in dem zu dem Brennraum führenden Ansaugrohr weit geöffnet und die Verbrennung wird im Wesentlichen nur durch die einzuspritzende Kraftstoffmenge gesteuert und/oder geregelt. Im Homogenbetrieb wird die Drosselklappe in Abhängigkeit von dem angeforderten Moment geöffnet bzw. geschlossen, und die einzuspritzende Kraftstoffmenge wird in Abhängigkeit von der angesaugten Luftmasse gesteuert und/oder geregelt. In beiden Betriebsarten, also im Schichtbetrieb und im Homogenbetrieb, wird die einzuspritzende Kraftstoffmenge zusätzlich in Abhängigkeit von einer Vielzahl weiterer Betriebsgrößen auf einen im Hinblick auf Kraftstoffeinsparung, Abgasreduzierung u.dgl. optimalen. Wert gesteuert und/oder geregelt. Die Steuerung und/oder Regelung ist dabei in den beiden Betriebsarten unterschiedlich.

Ebenfalls aus dem Stand der Technik bekannt sind Brennkraftmaschinen, bei denen Kraftstoff nicht durch eine einzige Einspritzung, sondern aufgeteilt auf mehrere aufeinander folgende Einspritzungen, insbesondere durch eine Haupteinspritzung und eine anschließende Nacheinsprirzung, in die Brennräume der Brennkraftmaschine eingespritzt wird. Aus der EP 0 971 104 A2 ist bspw. eine Brennkraftmaschine bekannt, bei der Kraftstoff durch eine Nacheinspritzung während eines Ausstoßtaktes der Brennkraftmaschine, also deutlich nach dem Zündzeitpunkt eines Kraftstoff-Luft-Gemisches, in die Brennräume eingespritzt wird. Die durch die Nacheinspritzung eingespritzte Kraftstoffmenge gelangt unverbrannt in einen Katalysator der Brennkraftmaschine und entzündet sich dort. Das führt zu einer Erwärmung des Katalysators, so dass für eine Regenerierung des Katalysators erforderliche Temperaturen in dem Katalysator erzielt werden können.

Brennkraftmaschinen mit Benzindirekteinspritzung können im Teillastbetrieb nicht ständig im thermodynamisch optimalen, drosselfreien, qualitätsgesteuerten Schichtbetrieb gefahren werden. Um bspw. eine wirksame Tankentlüftung oder eine effiziente Regenerierung eines Stickoxid (NOₓ)-Speicherkatalysators sicherzustellen, muss in gewissen Zeitabständen (abhängig von der Drehzahl und dem Lastzustand der Brennkraftmaschine) eine Drosselung der Ansaugluft der Brennkraftmaschine und damit verbunden ein stöchiometrisches (ë = 1) bzw. unterstöchiometrisches (ë < 1) Kraftstoff-Luft-Verhältnis eingestellt werden. Sobald die Ansaugluft-Zufuhr gedrosselt wird, muss der Kraftstoff in dem Ansaugtakt eingespritzt werden und nicht- wie im (drosselfreien) Schichtladebetrieb - in dem Verdichtungstakt. Die Brennkraftmaschine verhält sich dann bezüglich Kraftstoffverbrauch und Abgasemission wie eine konventionelle Brennkraftmaschine mit Saugrohreinspritzung.

Aus dem Stand der Technik ist es bekannt, während der oben beschriebenen Sonderfunktionen, Tankentlüftung, Katalysatorregenerierung o.a., den Kraftstoff im Rahmen einer einmaligen Einspritzung in den Ansaugtakt einzuspritzen. Eine Verlagerung des Einspritzzeitpunkts in den Verdichtungstakt verursacht in Verbindung mit einer extremen Ansaugluftdrosselung eine sehr hohe Rußemission und kommt deshalb in der Praxis nicht zur Anwendung.

Bei einem Betrieb der Brennkraftmaschine mit extremer Ansaugluftdrosselung und stöchiometrischer Gemischzusammensetzung verkoken allerdings die Spritzlöcher der Injektoren mit dem Effekt, dass nach einer gewissen Laufzeit der Brennkrafcmaschine die Einspritzzeit permanent erhöht werden muss, um die Kraftstoffzufuhr bei einer vorgegebenen Last konstant halten zu können. Durch Erhöhen der Einspritzzeit tq wird erreicht, dass der Zeitquerschnitt ((dm/dt) * tq) für die Kraftstoffzufuhr pro Arbeitszyklus unverändert bleibt.

Obwohl die Sonderfunktionen zur Tankentlüftung und Katalysatorregenierung nur für eine kurze Zeitdauer aktiviert werden, muss dennoch gewährleistet sein, dass eine Einspritzventilverkokung, d.h. eine Spritzlochinnenverkokung mit Durchflussstörungen, in dieser Betriebsphase unter allen Umständen verhindert wird. Sonst muss die Einspritzzeit nach einer längeren Betriebsdauer über die Applikationsgrenzen hinaus erhöht werden.

Der vorliegenden Erfindung liegt deshalb die Aufgabe zu Grunde, eine Spritzlochinnenverkokung von Spritzlöchern eines Einspritzventils, insbesondere bei hoher Ansaugluftdrosselung und stöchiometrischer bzw. unterstöchiomezrischer. Gemischzusammensetzung, wirksam zu vermeiden.

Zur Lösung dieser Aufgabe schlägt die vorliegende Erfindung ausgehend von dem Verfahren der eingangs genannten Art vor, dass durch die Haupteinspritzung der überwiegende Anteil der gesamten einzuspritzenden Kraftstoffmenge eingespritzt wird und eine Veränderung eines von der Brennkraftmaschine abgegebenen Moments ausschließlich über eine Veränderung der Einspritzzeit während der Haupteinsprirzung gesteuert bzw. geregelt wird, wobei der Kraftstoff durch die Haupteinspritzung und die anschließende Nacheinspritzung vor dem Zündzeitpunkt eines Kraftstoff-Luft-Gemisches eingespritzt wird.

### Vorteile der Erfindung

Erfindungsgemäß ist erkannt worden, dass durch eine Aufteilung des Einspritzimpulses auf mehrere Einspritzimpulse eine Spritzlochinnenverkokung eines Einspritzventils, insbesondere eines Mehrloch-Einspritzventils, wirksam verhindert werden kann. Außerdem stellt sich durch die gesplittete Einspritzung eine Verbrennung mit einem besonders günstigen Wirkungsgrad ein, was sich besonders an der im Vergleich zu einer Einzeleinspritzung deutlich niedrigeren Abgastemperatur zeigt.

Die Verbrennung eines Kraftstoff-Luft-Gemisches mit starkem Unterdruck und stöchiometrischer Gemischzusammensetzung weist hohe Wandwärmeverluste durch Aufheizen der Brennraumwände und somit auch der Einspritzorgane auf. Es werden insbesondere diejenigen Bereiche erwärmt, die der Verbrennung unmittelbar ausgesetzt sind. Auf Grund der Verbrennungshitze entstehen schwer siedende Ablagerungen an den Spritzlochinnenwänden, die nicht mehr vollständig verbrannt werden können. Man kann davon ausgehen, dass in dem Verbrennungstakt die Flammenfront den Ventilspitzenbereich erfasst, die Verbrennungsreaktionen jedoch in dem Spritzlochbereich stark verlangsamt werden, da dort ein fettes Gemisch vorhanden ist und die Flamme an den kälteren wandzonen gelöscht wird.

Erfindungsgemäß ist außerdem erkannt worden, dass eine zweite und jede weitere Einspritzung von Kraftstoff in den Brennraum die Ablagerungen der schwer siedenden Kraftstoffbestandteile im Inneren der Spritzlöcher des Einspritzventils verringern kann. Durch die zweite Einspritzung wird die Innenkontur des Spritzlochbereichs von dem zuvor erfolgten Auftrag des Kraftstoffkondensats freigeblasen. Außerdem wird der Kraftstoff bei einem zweiten Einspritzimpuls in das Einspritzventil hineingedrückt, da bspw. die Kraftstoffsäule in dem Einspritzventil gegen den Kompressionsdruck in dem Brennraum eingespritzt werden muss. Dadurch ergibt sich eine satte Wandanlagerung des Kraftstoffes ohne Ablösungstendenzen, wodurch die Wärmekonvektion bzw. die Ventilinnenkühlung stark verbessert und eine Separation des Kraftstoffs in leicht flüchtige und schwer flüchtige Kraftstoffbestandteile verhindert wird. Der Kraftstoff wird mit seinen Additiven nahezu komplett in den Brennraum eingespritzt. Auf Grund der unterdrückten Separation bilden sich dann auch keine teilreagierten Verbrennungsrückstände im Inneren der Spritzlöcher.

Gemäß einer vorteilhaften Weiterbildung der vorliegenden Erfindung wird vorgeschlagen, dass während der Nacheinspritzung gerade so viel Kraftstoff eingespritzt wird, dass eine Ventilnadel des Einspritzventils einen Hubanschlag gerade noch berührt und danach sofort wieder schließt. Damit ist die Nacheinspritzmenge zeitlich eng begrenzt. Aus diesem Grund wird eine veränderung eines von der Brennkraftmaschine abgegebenen Moments ausschließlich über eine Veränderung der Einspritzzeit während der Haupteinspritzung gesteuert bzw. geregelt.

Gemäß einer bevorzugten Ausführungsform der vorliegenden Erfindung wird vorgeschlagen, dass die Haupteinspritzung während eines Ansaugtakts der Brennkraftmaschine und die mindestens eine Nacheinspritzung während eines Verdichtungstakts der Brennkraftmaschine ausgeführt wird. Die Haupteinspritzung kann bereits kurz nach dem Gaswechsel-OT (oberer Totpunkt ) ausgelöst werden, und sollte spätestens kurz vor dem darauffolgenden UT (unterer Totpunkt) abgeschlossen sein. Die Einspritzlage der Haupteinspritzung hängt in erster Linie von der Brennraumgestaltung ab. In Brennräume mit ausgeprägten Kolbenmulden wird man vorzugsweise kurz nach dem Gaswechsel-OT einspritzen, da im Wesentlichen der Kolbenmuldenrand (bezüglich Auswaschen von Motoröl unkritisch) und weniger die Zylinderwand benetzt wird und außerdem mehr Zeit für die Gemischaufbereitung zur Verfügung steht. In Brennräumen mit flachen Kolben wird man dagegen vorzugsweise im Bereich der maximalen Kolbengeschwindigkeit einspritzen, da in dieser Phase die angesaugte Luft ihre höchste Strömungsgeschwindigkeit erreicht und somit die Vermischung zwischen Kraftstoff und Luft am intensivsten ist.

Gemäß einer weiteren bevorzugten Ausführungsform der vorliegenden Erfindung wird vorgeschlagen, dass die Haupteinspritzung im Wesentlichen während einer maximalen Geschwindigkeit eines Kolbens der Brennkraftmaschine ausgeführt wird, wobei der Kolben den Brennraum der Brennkraftmaschine begrenzt, in den Kraftstoff eingespritzt wird. Der Schwerpunkt der Haupteinspritzung liegt vorzugsweise um 270°KW (Kurbelwelle) vor dem Zünd-OT.

Die mindestens eine Nacheinspritzung wird vorteilhafterweise nach Erreichen eines vorgebbaren Kompressionsdruckniveaus in einem Brennraum der Brennkraftmaschine, in den Kraftstoff eingespritzt wird, ausgeführt. Die Nacheinspritzung sollte zudem kurz vor dem Zündzeitpunkt erfolgen. Der frühestmögliche Einspritzbeginn für die Nacheinspritzung hängt also von dem Betrag des aktuellen Zylinderdrucks ab. Die Nacheinspritzung wird vorzugsweise bei einem absoluten Ansaugluftdruck von etwa 400 mbar und einem Kompressionsdruckniveau in einem Brennraum von > 2 bar ausgeführt. Die Angaben sind beispielhaft für einen Betriebspunkt. Wichtig ist, dass die zweite Einspritzung dann stattfindet, nachdem das Gemisch aus der ersten Einspritzung bereits durch Erhöhung des Kompressionsdruckes kondensiert ist.

Das erfindungsgemäße Verfahren wird vorteilhafterweise zum Vermeiden einer Spritzlochinnenverkokung von Spritzlöchern von Einspritzventilen einer Brennkraftmaschine eingesetzt.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem speicherelement, insbesondere auf einem Flash-Memory, abgespeichert ist.

Von besonderer Bedeutung ist die Realisierung des erfindungsgemäßen verfahrens in der Form eines Speicherelements, das für ein Steuergerät einer direkteinspritzenden Brennkraftmaschine insbesondere eines Kraftfahrzeugs vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens programmiert ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt, wie das Verfahren, zu dessen Ausführung das Computerprogramm geeignet ist. Als Speicherelement kann insbesondere ein elektrisches Speichermedium zur Anwendung kommen, bspw. ein Read-Only-Memory ein Random-Access-Memory oder ein Flash-Memory.

Als eine weitere Lösung der Aufgabe der vorliegenden Erfindung wird ausgehend von dem Steuergerät der eingangs genannten Art vorgeschlagen, dass das Steuergerät das Einspritzventil derart ansteuert, dass das Einspritzventil durch die Haupteinspritzung den überwiegenden Anteil der gesamten einzuspritzen,den Kraftstoffmenge einspritzt, und das Steuergerät eine Veränderung eines von der Brennkraftmaschine abgegebenen Moments ausschließlich über eine Veränderung der Einspritzzeit während der Haupteinspritzung steuert bzw. regelt, wobei das Steuergerät das Einspritzventil derart ansteuert, dass das Einspritzventil den Kraftstoff durch die Haupteinspritzung und die mindestens eine anschließende Nacheinspritzung vor dem Zündzeitpunkt eines Kraftstoff-Luft-Gemisches einspritzt.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Susammenfassung in den Patentansprüchen oder deren Rückbeziehung sowie unabhängig von ihrer Formulierung bzw. Darstellung in der Beschreibung bzw. in den Zeichnungen. Es zeigen:
- Figur 1: eine direkteinspritzende Brennkraftmaschine bei der das erfindungsgemäße Verfahren eingesetzt werden kann;
- Figur 2: ein Diagramm zum Vergleich der Rußemissionen bei unterschiedlichen Einspritzungen von Kraftstoff in einen Brennraum einer Brennkraftmaschine;
- Figur 3: ein Diagramm zum Vergleich der Kohlenwasserstoffemissionen bei unterschiedlichen Einspritzungen von Kraftstoff in einen Brennraum einer Brennkraftmaschine;
- Figur 4: ein Diagramm zum Vergleich der Abgastemperaturen bei unterschiedlichen Einspritzungen von Kraftstoff in einen Brennraum einer Brennkraftmaschine;
- Figur 5: einen Verlauf eines Verbrennungsdrucks in einem Brennraum einer Brennkraftmaschine bei einem Ansaugluftdruck von 400 mbar und einer Drehzahl von 1800 U/min; und
- Figur 6: ein Diagramm zum Vergleich der Einspritzzeiten bei einer konstanten einzuspritzenden Kraftstoffmenge für unterschiedliche Kraftstoffeinspritzungen.

### Beschreibung der Ausführungsbeispiele

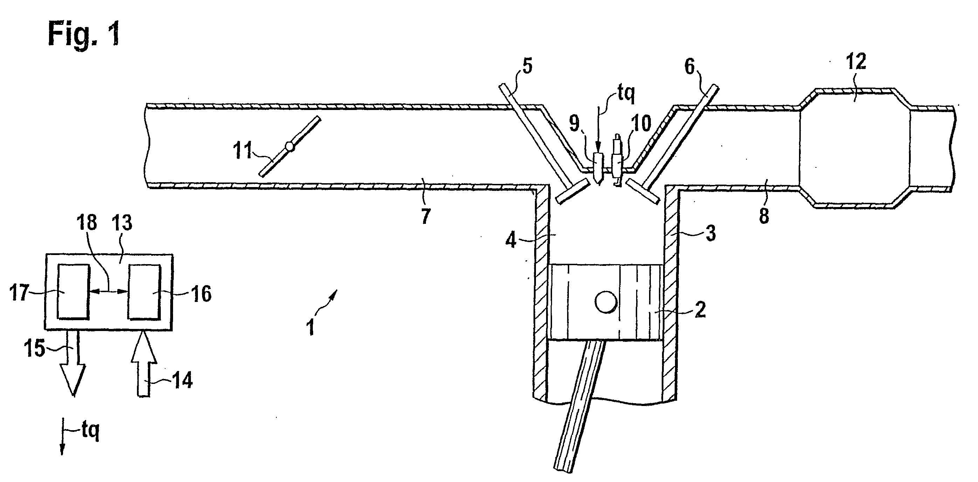

In Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der u.a, durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein als ein Mehrloch-Einspritzventil ausgebildetes Einspritzventil 9 (sog. Injektor) und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der zur Reinigung der durch die Verbrennung des Kraftstoffs entstehenden Abgase dient.

Der Kolben 2 wird durch eine Verbrennung eines Kraftstoff-Luft-Gemischs in dem Brennraum 4 in eine Hin- und Herbewegung versetzt, die auf eine (nicht dargestellte) Kurbelwelle übertragen wird und auf diese ein Drehmoment ausübt.

Ein Steuergerät 13 ist von Eingangssignalen 14 beaufschlagt, die mittels Sensoren gemessene Betriebsgrößen der Brennkraftmaschine 1 darstellen. Bspw. ist das Steuergerät 13 mit einem Luftmassensensor, einem Lambda-Sensor, einem Drehzahlsensor oder dergleichen verbunden. Des weiteren ist das steuergerät 13 mit einem Fahrpedalsensor verbunden, der ein Signal erzeugt, das die Stellung eines von einem Fahrer betatigbaren Fahrpedals und damit das angeforderte Drehmoment angibt. Das Steuergerät 13 erzeugt Ausgangssignale 15, mit denen über Aktoren bzw. Steller das Verhalten der Brennkraftmaschine 1 beeinflusst werden kann. Bspw. ist das Steuergerät 13 mit dem Einspritzventil 9, der Zündkerze 10 und der Drosselklappe 11 oder dergleichen verbunden und erzeugt die zu deren Ansteuerung erforderlichen Signale.

U.a. ist das Steuergerät 13 dazu vorgesehen, die Betriebsgrößen der Brennkraftmaschine 1 zu steuern und/oder zu regeln. Bspw. wird die von dem Einspritzventil 9 in den Brennraum 4 eingespritzte Kraftstoffmasse (über die Einspritzzeit tq) und der Zeitpunkt der Kraftstoffeinspritzung von dem Steuergerät 13 insbesondere im Hinblick auf einen geringen Kraftstoffverbrauch, eine geringe Abgasemission und/oder eine geringe Geräuschemission gesteuert und/oder geregelt. Zu diesem Zweck ist das Steuergerät 13 mit einem Mikroprozessor 16 versehen, der in einem Speichermedium 17, das bspw. als, ein Flash-Memory ausgebildet ist, ein Computerprogramm abgespeichert hat, das dazu geeignet ist, die genannte Steuerung und/oder Regelung durchzuführen. Zur Abarbeitung des in dem Speichermedium 17 gespeicherten Computerprogramms wird dieses entweder als Ganzes oder befehlsweise über eine Datenübertragungsverbindung 18 an den Mikroprozessor 16 übertragen.

Die Brennkraftmaschine 1 aus Figur 1 kann in einer Vielzahl unterschiedlicher Betriebsarten betrieben werden. So ist es möglich, die Brennkraftmaschine 1 in einem Homogenbetrieb, einem Schichtbetrieb, einem homogenen Magerbetrieb oder dergleichen zu betreiben.

Im Homogenbetrieb wird der Kraftstoff während eines Ansaugtaktes von dem Einspritzventil 9 direkt-in den Brennraum 4 der Brennkraftmaschine 1 eingespritzt. Der Kraftstoff wird aufgrund der relativ frühen Einspritzung bis zur Zündung noch stark verwirbelt, so dass in dem Brennraum 4 ein im Wesentlichen homogenes Kraftstoff-Luft-Gemisch entsteht. Das zu erzeugende Moment wird dabei im Wesentlichen über die Stellung der Drosselklappe 11 von dem Steuergerät 13 eingestellt. Im Homogenbetrieb werden die Betriebsgrößen der Brennkraftmaschine 1 derart gesteuert und/oder geregelt, dass e (verhältnis von zugeführter Luftmenge zu zugeführter Kraftstoffmasse) gleich eins ist. Der Homogenbetrieb wird insbesondere bei Volllast angewendet.

Der homogene Magerbetrieb entspricht weitgehend dem Homogenbetrieb, es wird jedoch das e auf einen Wert > 1 eingestellt.

Im Schichtbetrieb wird der Kraftstoff während eines Verdichtungstaktes von dem Einspritzventil 9 direkt in den Brennraum 4 der Brennkraftmaschine 1 eingespritzt. Damit ist bei der Zündung durch die Zündkerze 10 kein homogenes Gemisch in dem Brennraum 4 vorhanden, sondern eine Kraftstoffschichtung. Die Drosselklappe 11 kann, abgesehen von Anforderungen z.B. einer Abgasrückführung und/oder einer Tankentlüftung, vollständig geöffnet und die Brennkraftmaschine 1 damit entdrosselt betrieben werden. Das zu erzeugende Moment wird im Schichtbetrieb weitgehend über die in dem Brennraum 4 eingespritzte Kraftstoffmasse ((dm/dt)*tq) eingestellt. Mit dem Schichtbetrieb kann die Brennkraftmaschine 1 insbesondere im Leerlauf und bei Teillast betrieben werden.

Zwischen den genannten Betriebsarten der Brennkraftmaschine 1 kann umgeschaltet werden. Derartige Umschaltungen werden von dem Steuergerät 13 durchgeführt.

Brennkraftmaschinen 1 mit Benzin-Direkteinspritzung können im Teillastbetrieb nicht ständig in einem thermodynamisch optimalen, drosselfreien, qualitätsgesteuerten Schichtbetrieb gefahren werden. Um bspw. eine wirksame Tankentlüftung oder eine effiziente Regenerierung eines Stickoxid(NOₓ)-Speicherkatalysators 12 sicherzustellen, muss in gewissen Zeitabständen (abhängig von der Drehzahl und dem Lastzustand der Brennkraftmaschine 1) eine Drosselung der Ansaugluft der Brennkraftmaschine 1 und damit verbunden ein stöchiometrisches bzw. unterstöchiometrisches (ë<1) Kraftstoff-Luft-Verhältnis eingestellt werden. Sobald die Ansaugluftzufuhr gedrosselt wird, muss der Kraftstoff in dem Ansaugtakt eingespritzt werden und nicht - wie im (drosselfreien) Schichtladebetrieb - in dem Verdichtungstakt. Die Brennkraftmaschine 1 verhält sich dann bzgl. Kraftstoffverbrauch und Abgasemissionen wie eine konventionelle Brennkraftmaschine mit Saugrohreinspritzung.

Beim Betrieb der Brennkraftmaschine 1 mit extremer Ansaugluftdrosselung und stöchiometrischer Gemischzusammensetzung, verkoken allerdings insbesondere bei einer Einspritzung des Kraftstoffs während des Ansaugtakts die Spritzlöcher des Einspritzventils 9 mit dem Effekt, dass nach einer gewissen Laufzeit die Einspritzzeit tq von dem Steuergerät 13 permanent erhöht werden muss, um die Kraftstoffzufuhr bei einer vorgegebenen Last konstant halten zu können. Der Zeitquerschnitt ((dm/dt) * tq) für die Kraftstoffzufuhr pro Arbeitszyklus bleibt also unverändert.

Obwohl die Sonderfunktionen wie bspw. Tankentlüftung oder Katalysatorregenerierung nur für eine kurze Zeitdauer aktiviert werden, muss gewährleiszet sein, dass eine Spritzlochinnenverkokung der Spritzlöcher des Einspritzventils 9 und eine damit verbundene Durchflussstörung unter allen Umständen wird, da sonst die Einspritzzeit tq über eine längere Betriebsdauer über die Applikationsgrenzen hinaus erhöht werden muss.

Erfindungsgemaß wird ein Verfahren zum Vermeiden der Spritzlochinnenverkokung der Spritzlöcher des Einspritzventils 9 vorgeschlagen, wobei der Kraftstoff durch eine mehrfache Einspritzung, insbesondere durch eine zweifache Einspritzung aufgeteilt in eine erste Haupteinspritzung und eine anschließende Nacheinspritzung, in den Brennraum 4 der Brennkraftmaschine 1 eingespritzt wird. Dadurch kann die Spritzlochinnenverkokung, insbesondere bei hoher Ansaugluftdrosselung und stöchiometrischer bzw. unterstöchiometrischer Gemischzusammensetzung, wirksam unterbunden werden.

In der Haupteinspritzung wird der überwiegende Anteil der gesamten einzuspritzenden Kraftstoffmasse eingespritzt, wohingegen während der Nacheinspritzung lediglich so viel Kraftstoff eingespritzt wird, dass eine Ventilnadel des Einspritzventils 9 einen Hubanschlag gerade noch berührt und danach sofort wieder schließt. Damit ist die Nacheinspritzmenge zeitlich eng begrenzt. Eine eventuelle Veränderung eines von der Brennkraftmaschine abgegebenen Moments wird deshalb ausschließlich über eine Veränderung der Einspritzzeit tq während der Haupteinspritzung gesteuert bzw. geregelt.

Die besten Ergebnisse lassen, sich erzielen, d.h. die Spritzlochinnenverkokung kann am Besten dann unterbunden werden, wenn die Haupteinspritzung während eines Ansaugtakts der Brennkraftmaschine 1 und die Nacheinspritzung während eines Verdichtungstaktes der Brennkraftmaschine 1 ausgeführt wird. Die Haupteinspritzung kann bereits kurz nach einem Gaswechsel-OT (oberer Totpunkt) ausgelöst werden und sollte spätestens kurz vor dem darauffolgenden UT (unteren Totpunkt) abgeschlossen sein. Der Schwerpunkt der Haupteinspritzung wird vorzugsweise in den Bereich der maximalen Geschwindigkeit des Kolbens 2 um etwa 270°KW (Kurbelwelle) vor Zünd-OT verlegt. Die Einspritzlage der Haupteinspritzung hängt in erster Linie von der Gestaltung des Brennraums 4 ab. In Brennräume 4 mit ausgeprägten Kolbenmulden wird vorzugsweise kurz nach dem Gaswechsel-OT eingespritzt, da im Wesentlichen der Kolbenmuldenrand (bzgl. Auswaschen von Motoröl unkritisch) und weniger die Wand des Zylinders 3 benetzt wird und außerdem mehr Zeit für die Gemischaufbereitung zur Verfügung steht. In Brennräume 4 mit flachen Kolben 2 wird vorzugsweise im Bereich der maximalen Geschwindigkeit des Kolbens 2 eingespritzt, da in dieser Phase die angesaugte Luft ihre höchste Strömungsgeschwindigkeit erreicht und somit die Vermischung zwischen Kraftstoff und Luft am intensivsten ist.

Die Einspritzmenge der Nacheinspritzung wird zwischen dem Erreichen eines vorgebbaren Kampressionsdruckniveaus in dem Brennraum 4 und kurz vor dem Zeitpunkt der Zündung des Kraftstoff-Luft-Gemisches in dem Brennraum 4 abgesetzt. Der frühestmögliche Einspritzbeginn der Nacheinspritzung hängt also von dem Betrag eines bestimmten Zylinderdrucks zum Zeitpunkt des Einspritzbeginns ab.

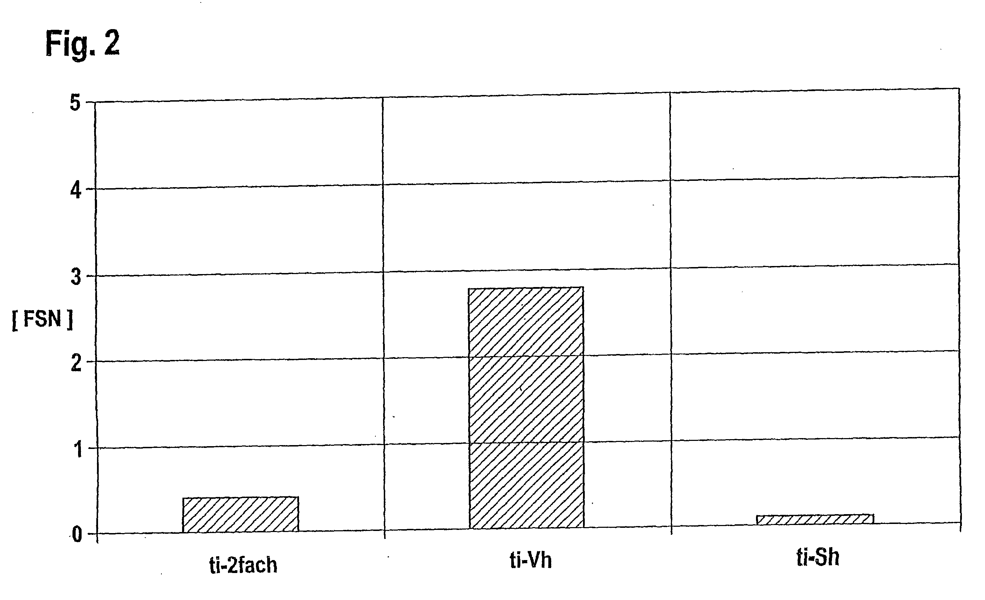

In Figur 2 ist ein Diagramm mit Rußemissionen für unterschiedliche Arten der Kraftstoffeinspritzung dargestellt. Der Grad der Rußemission kann in FSN (Filter Smoke Number) angegeben werden. Es ist deutlich zu erkennen, dass bei einem Einzeleinspritzimpuls während des Saughubs (ti-Sh) die geringste Rußemission auftritt. Eine wesentlich höhere Rußemission tritt dagegen bei einem Einzeleinspritzimpuls während des Verdichtungshubs (tiVh) auf. Bei einer Aufteilung des Einspritzimpulses in einen Haupteinspritzimpuls und einen Nacheinspritzimpuls im Sinne der vorliegenden Erfindung (ti-2fach) tritt eine Rußemission auf, die zwar etwas über der Rußemission bei einem Einzeleinspritzimpuls während des Saughubs (ti-Sh), jedoch deutlich unterhalb der Rußemission eines Einzeleinspritzimpulses während des Verdichtungshubs (ti-Vh) liegt. Dies zeigt, dass das erfindungsgemäße Verfahren zum Vermeiden einer Spritzlochinnenverkokung nahezu keine Erhöhung der Rußemission nach sich zieht.

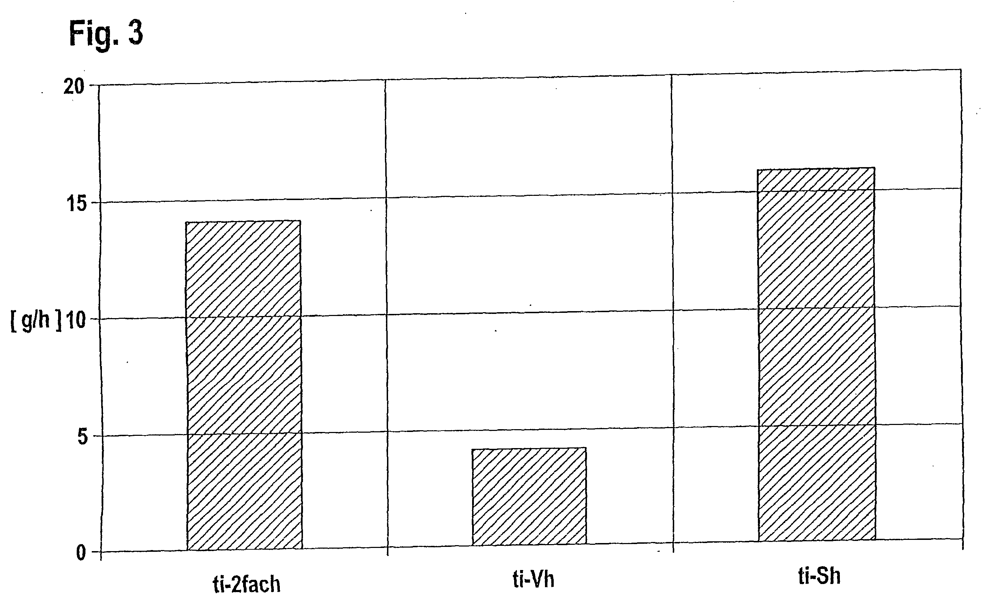

In Figur 3 ist ein Diagramm mit Kohlenwasserstoff (HC)-Emissionen für verschiedene Arten der Kraftstoffeinspritzung dargestellt. Es ist deutlich zu erkennen, dass die geringsten HC-Emissionen bei einem Einzeleinspritzimpuls während des verdichtungshubs (ti-Vh) und die größten HC-Emissionen bei einem Einzeleinspritzimpuls während des Saughubs (ti-Sh) auftreten. Bei einer Aufteilung des Einspritzimpulses in einen Haupteinspritzimpuls und einen Nacheinspritzimpuls gemäß der vorliegenden Erfindung (ti-2fach) treten zwar höhere HC-Emissionen als bei einem Einzeleinspritzimpuls während des Verdichtungshubs (ti-Vh), jedoch geringere HC-Emissionen als bei einem Einspritzimpuls während des Saughubs (ti-Sh) auf. Somit führt das erfindungsgemäße Verfahren zum Vermeiden einer Spritzlochinnenverkokung auch nicht zu überhöhten HC-Emissionen.

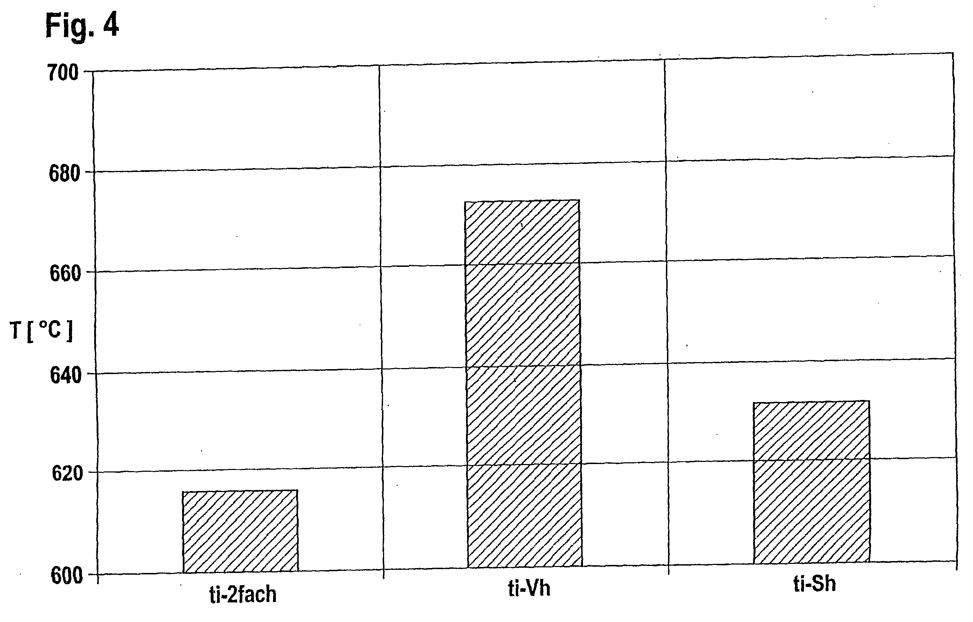

In Figur 4 ist ein Diagramm mit den Abgastemperaturen T für verschiedene Arten der Kraftstoffeinspritzung dargestellt. Es ist deutlich zu erkennen, dass mit Abstand die höchsten Abgastemperaturen von etwa 675° Celsius bei einem Einzeleinspritzimpuls während des Verdichtungshubs (ti-Vh) auftreten. Etwas geringere Abgastemperaturen im Bereich von etwa 635° Celsius treten bei einem Einzeleinspritzimpuls während des Saughubs (ti-Sh) auf. Die mit Abstand geringsten Abgastemperaturen im Bereich von etwa 615° Celsius treten jedoch bei dem in einen Haupteinspritzimpuls und einen Nacheinspritzimpuls aufgeteilten Einspritzimpuls gemäß der vorliegenden Erfindung (ti-2fach) auf. Die geringen Abgastemperaturen deuten auf eine vollständigere Verbrennung des Kraftstoffs in dem Brennraum 4 und damit auf einen besonders hohen Wirkungsgrad hin.

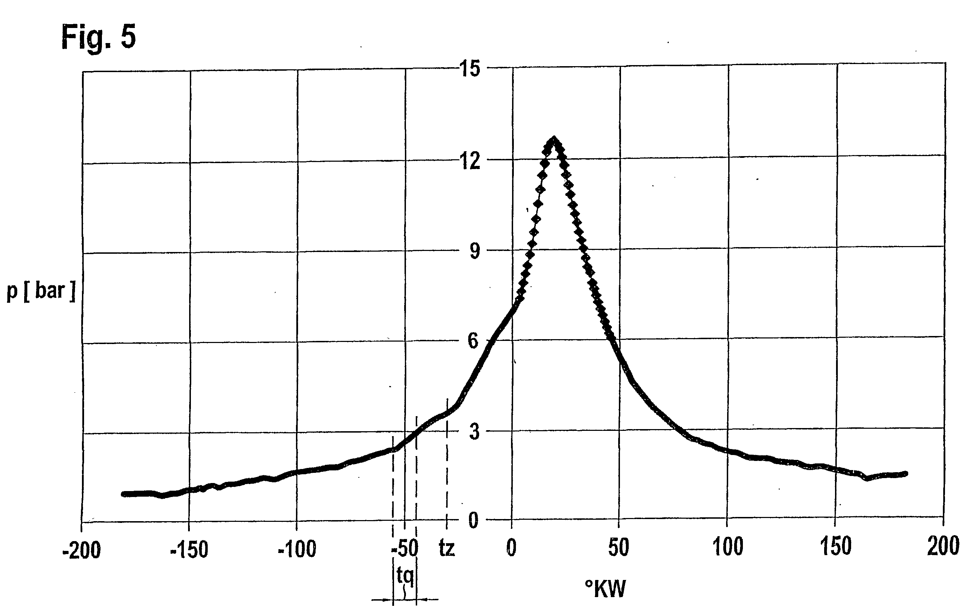

In Figur 5 ist ein Verbrennungsdruckverlauf in dem Brennraum 4 für einen Ansaugrohrdruck von etwa 400 mbar und eine Drehzahl der Brennkraftmaschine 1 von etwa 1.800 U/min in Abhängigkeit von der Winkelstellung der Kurbelwelle (°KW) dargestellt. Der Einspritzbeginn der Haupteinspritzung lag bei etwa 280°KW vor dem Zünd-OT (O°KW). Die Einspritzzeit der Haupteinspritzung betrug etwa 1,3 Millisekunden. Der Einspritzbeginn der Nacheinspritzung liegt bei etwa 55°KW vor dem Zünd-OT. Bei einer Einspritzzeit tq der Nacheinspritzung von etwa 0,9 Millisekunden liegt das Einspritzende der Nacheinspritzung bei etwa -45°KW vor dem Zünd-OT. Ein in einem Kraftstoff zumesssystem der Brennkraftmaschine 1 herrschender Raildruck lag bei dem in Figur 5 dargestellten Verbrennungsdruckverlauf bei 120 bar. Der Zündzeitpunkt t_{z} liegt etwa bei 30°KW vor dem Zünd-OT.

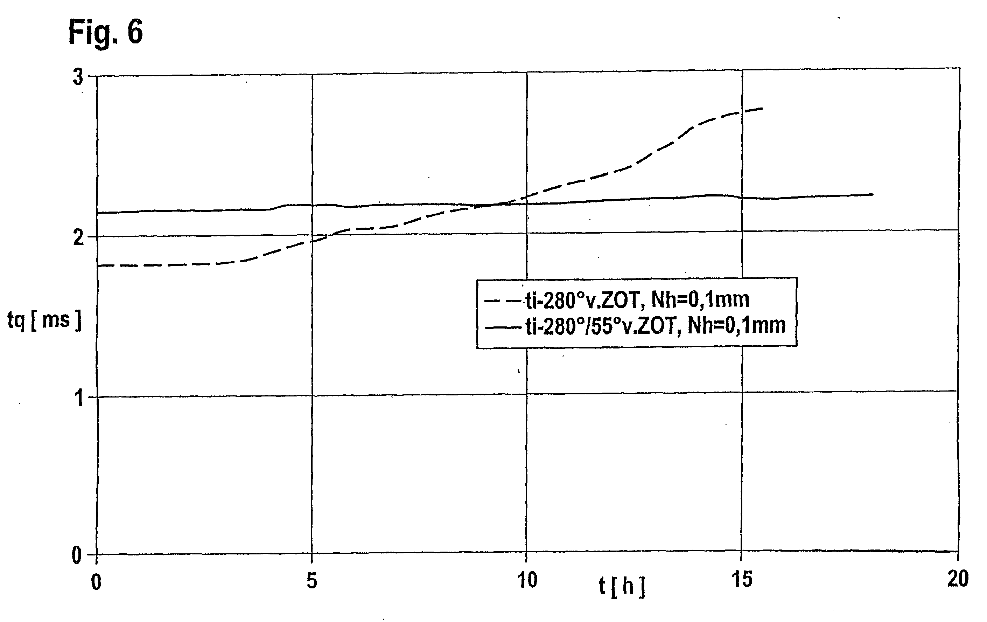

In Figur 6 ist der Verlauf von Einspritzzeiten für unterschiedliche Arten der Kraftstoffeinspritzung bei konstanter Motorlast dargestellt. Die von dem Steuergerät 13 einzustellende Einspritzzeit tq ist ein Maß für den Grad der Spritzlochinnenverkokung. Je stärker die Spritzlöcher des Einspritzventils 9 mit Ablagerungen zugesetzt sind, desto länger muss die Einspritzzeit tq gewählt werden, um den verringerten Spritzlochdurchmesser die gleiche Kraftstoffmasse einzuspritzen. Der Verlauf der Einspritzzeit tq für einen aus dem Stand der Technik bekannten Einzeleinspritzimpuls ist in Figur 6 gestrichelt dargestellt. Der Einspritzbeginn liegt bei 280°KW vor dem Zünd-OT. Deutlich ist zu erkennen, dass die Einspritzzeit tq im Verlauf eines etwa 15-stündigen Betriebszeitraums von anfänglich etwa 1,7 Millisekunden auf etwa 2,6 Millisekunden nach 15 Stunden Versuchsdauer ansteigt. Der Verlauf der Einspritzzeit tq für das erfindungsgemäße Verfahren, bei dem die Kraftstoffeinspritzung auf eine Haupteinspritzung und eine Nacheinspritzung aufgeteilt ist, ist mit einer durchgezogenen Linie dargestellt. Der Beginn der Haupteinspritzung liegt bei 280°KW und der Beginn der Nacheinsprintzung bei 55°KW vor Zünd-OT. Bei dem in einen Haupreinspritzimpuls und einen Nacheinspritzimpuls aufgeteilten Einspritzimpuls bleibt die Einspritzzeit tq nahezu konstant. Während einer Betriebsdauer von etwa 18 Stunden stieg die Einspritzzeit tq lediglich von etwa 2,2 Millisekunden auf etwa 2,3 Millisekunden nach 18 Stunden geringfügig an. Mit Nh ist in Figur 6 der ventilhub des Einspritzventils 9 bezeichnet, der für beide Verläufe mit 0,1 mm gleich groß gewählt wurde.

Die Aufteilung des Einspritzimpulses in einen Haupteinspritzimpuls und einen Nacheinspritzimpuls dient nicht nur der Vermeidung von Spritzlochinnenablagerungen, sondern führt auch zu einer Stabilisierung der Verbrennung in dem Brennraum 4. Wird ausschließlich im Ansaugtakt (ti-Sh) eingespritzt, steigt die HC-Emission (vgl. Figur 3), begleitet von größeren Schwankungen des Verbrennungsdrucks. Findet die Einspritzung ausschließlich im Verdichtungshub (ti-vh) statt, steigt die Rußemission (vgl. Figur 2) und nach einer gewissen Laufzeit bilden sich Nebenschlüsse an der Zündkerze 10 mit allen unerwünschten Nebenerscheinungen, wie Zündaussetzern, weil die Isolationskeramik verrußt.

Mit Hilfe der zweigeteilten Einspritzung gemäß der vorliegenden Erfindung (ti-2fach) konnte auch diesbezüglich ein guter Kompromiss gefunden werden, mit einer zwar moderaten Rußerhöhung, aber einer reduzierten HC-Emission, verbunden mit einem stabileren Langzeitlaufverhalten verglichen mit der Einzeleinspritzung während des Ansaughubs (ti-Sh).

Durch Endoskopieaufnahmen in dem Brennraum 4 sind gravierende Unterschiede in der Ausformung der Einspritzstrahlen zwischen der Einspritzung im Ansaugtakt (ti-Sh) und der Einspritzung im Verdichtungstakt (ti-Vh) erkennbar. Durch den hohen Unterdruck in dem Ansaugrohr 7 erfährr der Kraftstoff während der Einspritzung in dem Ansaugtakt (ti-Sh) eine intensive Verdampfung (Aussaugen des Kraftstoffs, aus den Spritzlöchern des Einspritzventils 9). Diese Kraftstoffverdampfung findet bereits im Inneren des Einspritzventils 9 statt, in Bereichen wo - bedingt durch den Unterdruck in dem Zylinder 3 - der Dampfdruck unterschritten wird.

In der nachfolgenden Verdichtungsphase kondensiert der Kraftstoffdampf und schlägt sich an den Innenwänden der Spritzlöcher des Einspritzventils 9 nieder. Die Verbrennung mit starkem Unterdruck und stöchiometrischer Gemischzusammensetzung besitzt hohe Wandwärmeverluste durch Aufheizen der wände des Brennraums 4 und somit auch der Einspritzorgane, vor allem derjenigen Bereiche, die der Verbrennung unmittelbar ausgesetzt sind. Aufgrund der verbrennungshitze entstehen schließlich schwersiedende Ablagerungen an den. Spritzlochinnenwänden, die nicht mehr vollständig verbrannt werden können. In der Verbrennungsphase erfasst die Flammenfront den Spitzenbereich des Einspritzventils 9, die Verbrennungsreaktionen in dem Spritzlochbereich werden jedoch stark verlangsamt, da dort an fertes Gemisch vorhanden ist (Wandbenetzung durch das Kondensat) und die Flamme an den kälteren Wandzonen gelöscht wird.

Durch die zweite Einspritzung vor dem Zündzeitpunkt tz im Sinne der vorliegenden Erfindung wird die Innenkontur des Spritzlochbereichs von dem zuvor erfolgten Auftrag des Kraftstoffkondensats, freigeblasen.

Außerdem wird der Kraftstoff bei dem zweiten Einspritzimpuls nicht mehr durch den sich abwärtsbewegenden Kolben 2 (Unterdruck) aus dem Einspritzventil 9 ausgesaugt, sondern im Gegenteil durch den sich aufwärtsbewegenden Kolben 2 (Überdruck) eher in das Einspritzventil 9 hineingedrückt. Die Kraftstoffsäule in dem Einspritzventil 9 muss gegen den Verdichtungsdruck eingespritzt werden. Dadurch erfolgt eine satte Wandanlagerung des Kraftstoffs in den Spritzlöchern ohne Ablösungstendenzen, die Wärmekonvektion bzw. die Ventilinnenkühlung wird stark verbesserte, eine Separation in leicht flüchtige und schwer flüchtige Kraftstoffbestandteile verhindert. Der Kraftstoff wird mitsamt seinen Additiven nahezu komplett in den Brennraum 4 eingespritzt. Aufgrund der unterdrückten Separation bilden sich dann auch keine teilreagierten Verbrennungsrückstände, die sich an den Innenseiten der Sprizzlöcher ablagern.

## Patentansprüche

1. Verfahren zum Betreiben einer direkteinspritzenden Brennkraftmaschine (1), bei dem über ein Einspritzventil (9) Kraftstoff durch eine erste Haupteinspritzung und mindestens eine anschließende Nacheinspritzung in einen Brennraum (4) der Brennkraftmaschine (1) eingespritzt wird, **dadurch gekennzeichnet, dass** durch die Haupteinspritzung der überwiegende Anteil der gesamten einzuspritzenden Kraftstoffmenge eingespritzt wird und eine Veränderung eines von der Brennkraftmaschine (1) abgegebenen Momente ausschließlich über eine Veränderung der Einspritzzeit während der Haupteinspritzung gesteuert bzw. geregelt wird, wobei der Kraftstoff durch die Haupteinspritzung und die mindestens eine anschließende Nacheinspritzung vor dem Zündzeitpunkt (t_z) eines Kraftstoff-Luft-Gemisches eingespritzt wird.

2. Verfahren nach Anspruch 1, **dadurch gekennzeichnet, dass** während einer Nacheinspritzung gerade so viel Kraftstoff eingespritzt wird, das, eine Ventilnadel des Einspritzventils (9) einen Hubanschlag gerade noch berührt und danach sofort wieder schließt.

3. Verfahren nach Anspruch 1 oder 2, **dadurch gekennzeichnet, dass** die Haupteinspritzung während eines Ansaugtakts der Brennkraftmaschine (1) und die mindestens eine Nacheinspritzung während eines Verdichtungstakts der Brennkraftmaschine (1) ausgeführt wird.

4. Verfahren nach einem der Ansprüche 1 bis 3, **dadurch gekennzeichnet, dass** die Haupteinspritzung im Wesentlichen während einer maximalen Geschwindigkeit eines Kolbens (2) der Brennkraftmaschine (1) ausgeführt wird, wobei der Kolben (2) den Brennraum (4) der Brennkraftmaschine (1) begrenzt, in den Kraftstoff eingespritzt wird.

5. Verfahren nach einem der Ansprüche 1 bis 4, **dadurch gekennzeichnet, dass** die mindestens eine Nacheinspritzung nach Erreichen eines vorgebbaren Kompressionsdruckniveaus (p) in dem Brennraum (4) der Brennkraftmaschine (1), in den Kraftstoff eingespritzt wird, ausgeführt wird.

6. Verfahren nach Anspruch 5, **dadurch gekennzeichnet, dass** die mindestens eine Nacheinspritzung bei einem absoluten Druck in einem Ansaugrohr (7) zu dem Brennraum (4) der Brennkraftmaschine (1), in den Kraftstoff eingespritzt wird, von etwa 400mbar und einem Kompressionsdruckniveau (p) in dem Brennraum (4) von über 2 bar ausgeführt wird.

7. Verfahren nach einem der Ansprüche 1 bis 6, **dadurch gekennzeichnet, dass** das Verfahren zum Vermeiden einer Spritzlochinnenverkokung von Spritzlöchern des Einspritzventils (9) verwendet wird.

8. Computer programm, das auf einem Rechengerät (16), insbesondere auf einem Mikroprozessor, ablauffähig ist, **dadurch gekennzeichnet, dass** das Computerprogramm zur Ausführung eines Verfahrens nach einem der Ansprüche 1 bis 7 programmiert ist, wenn es auf dem Rechengerät (16) abläuft.

9. Computerprogramm nach Anspruch 8, **dadurch gekennzeichnet, dass** das Computerprogramm auf einem Speicherelement (17), insbesondere auf einem Flash-Speicher, abgespeichert ist.

10. Speicherelement (17), insbesondere Read-Only-Memory, Random-Access-Memory oder Flash-Memory, für ein Steuergerät (13) einer direkteinspritzenden Brennkraftmaschine (1) insbesondere eines Kraftfahrzeugs, wobei auf dem Speicherelement (17) ein Computerprogramm abgespeichert ist, das auf einem Rechengerät (16), insbesondere auf einem Mikroprozessor, ablauffähig ist, **dadurch gekennzeichnet, dass** das Computerprogramm zur Ausführung eines Verfahrens nach einem der Ansprüche 1 bis 7 programmiert ist.

11. Steuergerät (13) für eine direkteinspritzende Brennkraftmaschine (1) insbesondere eines Kraftfahrzeugs, wobei die Brennkraftmaschine (1) mindestens einen Brennraum (4) mit einem Einspritzventil (9) aufweist und das Steuergerät (13) das Einspritzventil (9) derart ansteuert, dass das Einspritzventil (9) Kraftstoff durch eine erste Haupteinspritzung und mindestens eine anschließende Nacheinspritzung in den Brennraum (4) der Brennkraftmaschine (1) einspritzt, **dadurch gekennzeichnet, dass** das Steuergerät (13) das Einspritzventil (9) derart ansteuert, dass das Einspritzventil (9) durch die Haupteinspritzung den überwiegenden Anteil der gesamten einzuspritzenden Kraftstoffmenge einspritzt, und das Steuergerät (13) eine Veränderung eines von der Brennkraftmaschine (1) abgegebenen Moments ausschließlich über eine Veränderung der Einspritzzeit während der Haupteinspritzung steuert bzw. regelt, wobei das Steuergerät (13) das Einspritzventil (9) derart ansteuert, dass das Einspritzventil (9) den Kraftstoff durch die Haupteinspritzung und die mindestens eine anschließende Nacheinspritzung vor dem Zündzeitpunkt (t_z) eines Kraftstoff-Luft-Gemisches einspritzt.

12. Steuergerät (13) nach Anspruch 11, **dadurch gekennzeichnet, dass** das Steuergerät (13) Mittel zur Ausführung eines Verfahrens nach einem der Ansprüche 2 bis 7 aufweist.

## Claims

1. Method for operating a direct-injection internal combustion engine (1), in which, via an injection valve (9), fuel is injected into a combustion chamber (4) of the internal combustion engine by means of a first main injection and at least one subsequent afterinjection, **characterized in that** the majority of the total quantity of fuel to be injected is injected by means of the main injection and a change in a torque output by the internal combustion engine (1) is controlled or regulated exclusively by changing the injection time during the main injection, with the fuel being injected by the main injection and the at least one subsequent afterinjection prior to the ignition instant (t_z) of a fuel/air mix.

2. Method according to Claim 1, **characterized in that** the amount of fuel injected during an afterinjection is just enough for a valve needle of the injection valve (9) to just touch a travel stop and then to immediately close again.

3. Method according to Claim 1 or 2, **characterized in that** the main injection is carried out during an induction stroke of the internal combustion engine (1) and the at least one afterinjection is carried out during a compression stroke of the internal combustion engine (1).

4. Method according to one of Claims 1 to 3 **characterized in that** the main injection is carried out substantially during a maximum velocity of a piston (2) of the internal combustion engine (1), the piston (2) delimiting the combustion chamber (4) of the internal combustion engine (1) into which fuel is injected.

5. Method according to one of Claims 1 to 4, **characterized in that** the at least one afterinjection is carried out after a predeterminable compression pressure level (p) has been reached in the combustion chamber (4) of the internal combustion engine (1) into which fuel is injected.

6. Method according to Claim 5, **characterized in that** the at least one afterinjection is carried out at an absolute pressure in an induction pipe (7) leading to the combustion chamber (4) of the internal combustion engine (1) into which fuel is injected of approximately 400 mbar and a compression pressure level (p) in the combustion chamber (4) of over 2 bar.

7. Method according to one of claims 1 to 6, **characterized in that** the method is used to avoid internal coking of injection holes in the injection valve (9).

8. Computer program which can run on a computer unit (16), in particular on a microprocessor, **characterized in that** the computer program is programmed to carry out a method according to one of Claims 1 to 7 when it runs on the computer unit (16).

9. Computer program according to Claim 8, **characterized in that** the computer program is stored on a memory element (17), in particular on a flash memory.

10. Memory element (17), in particular read only memory, random access memory or flash memory, for a control unit (13) of a direct-injection internal combustion engine (1), in particular of a motor vehicle, a computer program which can run on a computer unit (16), in particular on a microprocessor being stored on the memory element (17), **characterized in that** the computer program is programmed to carry out a method according to one of claims 1 to 7.

11. Control unit (13) for a direct-injection internal combustion engine (1), in particular of a motor vehicle, the internal combustion engine (1) having at least one combustion chamber (4) with an injection valve (9), and the control unit (13) actuating the injection valve (9) in such a manner that the injection valve (9) injects the fuel into the combustion chamber (4) of the internal combustion engine (1) by means of a first main injection and at least one subsequent afterinjection, **characterized in that** the control unit (13) actuates the injection valve (9) in such a manner that the injection valve (9) injects the majority of the total quantity of fuel to be injected by means of the main injection, and the control unit (13) controls or regulates a change in a torque output by the internal combustion engine (1) exclusively by changing the injection time during the main injection, with the control unit (13) actuating the injection valve (9) in such a manner that the injection valve (9) injects the fuel and the at least one subsequent afterinjection prior to the ignition instant (t_z) of a fuel/air mix.

12. Control unit (13) according to Claim 11, **characterized in that** the control unit (13) has means for carrying out a method according to one of Claims 2 to 7.

## Revendications

1. Procédé pour faire fonctionner un moteur à combustion interne (1) à injection directe, dont un injecteur (9) injecte du carburant dans une chambre de combustion (4) du moteur à combustion interne (1) par une première injection principale et par au moins une injection ultérieure qui suit immédiatement,
**caractérisé en ce que**
la majeure partie de toute la quantité de carburant à injecter est injectée par l'injection principale, et
une modification d'un couple fourni par le moteur à combustion interne (1) est exclusivement contrôlée ou réglée par une modification de la durée d'injection pendant l'injection principale, le carburant étant injecté, par l'injection principale et par l'au moins une injection ultérieure qui suit immédiatement, avant l'instant (t_z) où un mélange carburant/air est allumé.

2. Procédé selon la revendication 1,
**caractérisé en ce que**
pendant une injection ultérieure on injecte exactement la quantité de carburant pour qu'une aiguille de l'injecteur (9) touche encore une butée de course et se ferme aussitôt après.

3. Procédé selon la revendication 1 ou 2,
**caractérisé en ce que**
l'injection principale est réalisée pendant une course d'admission du moteur à combustion interne (1) et l'au moins une injection ultérieure pendant un temps de compression du moteur à combustion interne (1).

4. Procédé selon l'une des revendications 1 à 3,
**caractérisé en ce que**
l'injection principale est réalisée en majeure partie pendant que le piston (2) du moteur à combustion interne (1) a une vitesse maximale, le piston (2) délimitant alors dans le moteur à combustion interne (1) la chambre de combustion (4) dans laquelle le carburant est injecté.

5. Procédé selon l'une des revendications 1 à 4,
**caractérisé en ce que**
l'au moins une injection ultérieure est réalisée après qu'un niveau pré-défini de compression (p) est atteint dans la chambre de combustion (4) - du moteur à combustion interne (1) - dans laquelle le carburant est injecté.

6. Procédé selon la revendication 5,
**caractérisé en ce que**
l'au moins une injection ultérieure est réalisée, lorsque dans une tubulure d'aspiration (7) vers la chambre de combustion (4) - du moteur à combustion interne (1) - dans laquelle le carburant est injecté, la pression absolue est d'environ 400 millibars et que le niveau de compression (p) dans la chambre de combustion (4) est supérieur à 2 bars.

7. Procédé selon l'une des revendications 1 à 6,
**caractérisé en ce qu'**
on utilise le procédé pour éviter que les orifices d'injection de l'injecteur (9) carbonisent.

8. Programme informatique exécutable sur un ordinateur (16), en particulier sur un microprocesseur,
**caractérisé en ce que**
le programme informatique est programmé pour mettre en oeuvre un procédé selon l'une des revendications 1 à 7, lorsqu'il est exécuté sur un ordinateur (16).

9. Programme informatique selon la revendication 8,
**caractérisé en ce que**
le programme informatique est enregistré dans un élément de mémoire (17), en particulier dans une mémoire flash.

10. Élément de mémoire (17), en particulier mémoire morte, mémoire vive ou mémoire flash, destiné à un appareil de commande (13) pour un moteur à combustion interne (1) à injection directe, en particulier pour un véhicule, contenant un programme informatique enregistré exécutable sur un ordinateur (16), en particulier sur un microprocesseur,
**caractérisé en ce que**
le programme informatique est programmé pour mettre en oeuvre un procédé selon l'une des revendications 1 à 7.

11. Appareil de commande (13) pour un moteur à combustion interne (1) à injection directe, en particulier pour un véhicule, le moteur à combustion interne (1) présentant au moins une chambre de combustion (4) munie d'un injecteur (9) et l'appareil de commande (13) commandant l'injecteur (9) pour injecter du carburant dans la chambre de combustion (4) du moteur à combustion interne (1) par une première injection principale et par au moins une injection ultérieure qui suit immédiatement,
**caractérisé en ce que**
l'appareil de commande (13) commande l'injecteur (9) pour injecter par l'injection principale la majeure partie de la quantité de carburant à injecter, et commande ou règle une modification d'un couple fourni par le moteur à combustion interne (1) exclusivement en modifiant la durée d'injection pendant l'injection principale, l'appareil de commande (13) commandant alors l'injecteur (9) pour injecter, avant l'instant (t_z) où un mélange carburant/air est allumé, le carburant par l'injection principale et par l'injection ultérieure qui suit immédiatement.

12. Appareil de commande (13) selon la revendication 11,
**caractérisé en ce que**
l'appareil de commande (13) présente des moyens pour mettre en oeuvre un procédé selon l'une des revendications 2 à 7.
